# EUROPÄISCHE PATENTSCHRIFT

(11) **EP 0 691 168 B1**
(45) Veröffentlichungstag und Bekanntmachung des Hinweises auf die Patenterteilung: **10.09.1997**
(21) Anmeldenummer: 95107640.5
(22) Anmeldetag: 19.05.1995
(51) Int. Cl.: B23B 31/08

(54) **Schnellwechselfutter mit Längenausgleichsvorrichtung**
Quick change chuck with lengthadjustment device
Mandrin à changement rapide avec dispositif d'ajustement de longueur

(30) Priorität: 05.07.1994 DE 4423433
(43) Veröffentlichungstag der Anmeldung: 10.01.1996
(73) Patentinhaber: Emuge-Werk Richard Glimpel, Fabrik für Präzisionswerkzeuge, vormals Moschkau & Glimpel, D-91207 Lauf (DE)
(72) Erfinder:
(74) Vertreter: Matschkur, Götz, Lindner Patent- und Rechtsanwälte

(56) Entgegenhaltungen:
- DE-A- 1 810 223
- US-A- 3 521 314

## Beschreibung

Die Erfindung bezieht sich auf ein Schnellwechselfutter mit einer Längenausgleichsvorrichtung, bei der der Futterkörper gegen einen Federausgleich in den Futterschaft verschiebbar und gegen die Wirkung einer Rückholfeder gegenüber dem Futterschaft ausziehbar ist, und mit einer Vorrichtung zur Erhöhung der Ansprechkraft in Form einer unter Federkraft in eine Lagerausnehmung des Futterkörpers mit einer Ausrastschräge gedrückten, in den Futterschaft unter Freigabe des Futterkörpers ausrastbaren Sperrkugel, insbesondere für Einsätze mit einer Rutschkupplung.

Bei derartigen Schnellwechselfuttern bevorzugt man für den Längenausgleich eine weiche Feder, von z.B. 70 Newton, während man durch Vorsehen einer Vorrichtung zur Erhöhung der Andruckkraft eine hohe Ansprechkraft von beispielsweise 150 Newton haben möchten, damit z.B. bei stumpfen Bohrern nicht gleich der Längenauslgleich wirksam wird.

Die bislang vorgeschlagenen Vorrichtungen zur Erhöhung der Andruckkraft sind dabei so ausgebildet, daß im Futterschaft eine radiale Bohrung vorgesehen ist, in der eine Druckfeder gegen eine äußere Spannschraube lagert, die mit ihrem inneren Ende die Sperrkugel in die Lagerausnehmung des Futterkörpers drückt. Eine solche Anordnung baut jedoch radial sehr stark, da die nicht unerhebliche Länge der Druckfeder und der äußeren Sperrschraube in der Axialbohrung des Futterschafts untergebracht werden muß, so daß eine solche Vorrichtung beispielsweise überhaupt nicht im verjüngten vorderen Endbereich des Futterschafts unterbringbar ist, in der sie am leichtesten ein- und ausgebaut werden könnte. Hinzu kommt noch, daß die ausgerastete Kugel unter maximalem Druck am Umfang des Futterkörpers anliegt und ihn damit bremst und ggf. auch beschädigt.

Der Erfindung liegt daher die Aufgabe zugrunde, ein Schnellwechselfutter der eingangs genannten Art so auszugestalten, daß die Vorrichtung zur Erhöhung der Ansprechkraft kleinräumiger baut und mithin an beliebiger Stelle problemlos eingebaut werden kann.

Zur Lösung dieser Aufgabe ist erfindungsgemäß vorgesehen, daß die Sperrkugel zwischen zwei in einer Axialausnehmung des Futterschafts gelagerte Spannkugeln, die durch axial verlaufende Druckfedern gegeneinander verspannt sind, ausrastbar verschiebbar ist.

Durch die erfindungsgemäße Anordnung ergibt sich nicht nur der Vorteil, daß die Druckfedern axial verlaufen und mithin in radialer Richtung nur ein äußerst geringer, der Dicke der Federn entsprechender Raum benötigt wird. Darüber hinaus hat die erfindungsgemäße Anordnung, bei der die Sperrkugel zwischen zwei Spannkugeln ausrastet, auch noch den zusätzlichen Vorteil, daß sich beim Ausrasten stets der Eingriffswinkel der Sperrkugel in die Spannkugeln ändert, so daß nach dem Ausrasten die Sperrkugel, die etwas kleiner als die Spannkugeln ist, damit sie auch wieder in die Sperrstellung zurückgedrückt wird, nur leicht seitlich gegenüber den Spannkugeln versetzt ist, so daß nur eine minimale radiale Kraftkomponente auf die Sperrkugel ausgeübt wird, die gerade ausreicht, um sie zunächst wieder leicht nach innen zu bewegen, sobald der Entriegelungsfall aufgehoben werden soll. Es besteht aber nicht wie bei den bisherigen Anordnungen eine maximale radiale Verspannung der Sperrkugel auf der Außenfläche des Futterkörpers, wodurch ein sehr starkes Bremsmoment einerseits erzielt wird und zum anderen im Lauf der Zeit die Gefahr einer dauerhaften Verformung und Beschädigung der Oberfläche besteht.

Beim Zurückholen eines Bohrers od.dgl. mit Hilfe eines derartigen Schnellwechselfutters besteht die Gefahr, daß der Bohrer od.dgl. durch Späne verklemmt wird, die sowohl das Zurückdrehen als auch das Herausziehen aus dem Gewindeloch verhindern. Die dadurch blockierte Verdrehbarkeit führt im allgemeinen zu einem Ansprechen der im Einsatz vorgesehenen Rutschkupplung, so daß hierdurch keine Beschädigung auftritt. Beim weiteren Zurückziehen des Schnellwechselfutters würde dies jedoch am Ende des Längenausgleichs zu Bruch gehen. Um dies zu vermeiden, ist in weiterer Ausgestaltung der Erfindung vorgesehen, daß die Vorrichtung zur Erhöhung der Andruckkraft im vorderen Endbereich einer Hülse des Futterschaftes im Überlappungsbereich mit einem Arretierring für in eine Haltenut des Einsatzes eingreifende Rastkugeln angeordnet ist, daß die Lagerausnehmung eine Längsnut ist, deren Länge dem Längenausgleich entspricht, und daß am Arretierring ein nach Erreichen des vollen Längenausgleichs an einem Gegenanschlag des Futters angreifender Ausrastanschlag vorgesehen ist, so daß der Arretierring bei einem weiteren Auszug des Futterkörpers aus dem Futterschaft durch Ausrasten der Sperrkugel an der inneren Ausrastschräge der Längsnut gegenüber dem Futterkörper in eine Freigabestellung der Rastkugel unter Lösen des Einsatzes verschiebbar ist.

Durch die erfindungsgemäße Ausgestaltung läßt sich somit die Vorrichtung zur Erhöhung der Ansprechkraft gleichzeitig als Sicherungseinrichtung benutzen, die bei der vorstehend angesprochenen Verkeilung des Werkzeugs im Werkstück automatisch nach Durchfahren des Längenausgleichs eine Trennung des Einsatzes vom Schnellwechselfutter bewirkt, so daß eine Beschädigung des Schnellwechselfutters nicht möglich ist. Der Einsatz mit dem verkeilten Bohrer bleibt im Werkzeug stecken und muß dann in geeigneter Weise freigearbeitet werden. Die Blockierung des Bohrers kann aber nicht wie bisher bei der zumeist automatisierten Arbeitsweise zu einem vollständigen Bruch des Schnellwechselfutters führen.

Der Ausrastanschlag kann dabei im einfachsten Fall ein in eine Innenringnut des Sperr-Rings eingesetzter Seeger-Ring sein.

In Ausgestaltung der Erfindung kann vorgesehen sein, daß die Axialausnehmung des Futterschaftes nach außen offen und von einer lösbaren, vorzugsweise zwischen Seeger-Ringen liegenden, Abdeckhülse verschlossen ist.

Bei dieser Ausbildung, die ein sehr einfaches Einsetzen und Auswechseln der Kugeln und Federn für die Vorrichtung zur Erhöhung der Ansprechkraft und das automatische Lösen des Einsatzes andererseits ermöglicht, hat es sich darüber hinaus als besonders zweckmäßig erwiesen, zwischen einem in eine Nut des Futterschafts eingesetzten Seeger-Ring und dem vorderen Ende der Abdeckhülse einen radial über diesen nach außen unter Bildung des Gegenanschlags überstehenden Ring einzuklemmen.

Die Erfindung soll nachstehend anhand eines Ausführungsbeispiels sowie anhand der Zeichnung näher erläutert werden. Dabei zeigen:
- Fig. 1: einen Schnitt durch ein erfindungsgemäßes Schnellwechselfutter,
- Fig. 2: einen vergrößerten Schnitt durch den in Fig. 1 strichpunktierten Ausschnitt in der Null-Stellung des Schnellwechselfutters,
- Fig. 3: einen der Fig. 2 entsprechenden Schnitt nach dem Auslösen der Vorrichtung zur Erhöhung der Ansprechkraft,
- Fig. 4: einen der Fig. 2 entsprechenden Schnitt vor dem Ansprechen des Druckpunktes und der Zugausrastung, und
- Fig. 5: einen der Fig. 4 entsprechenden Schnitt nach dem Ansprechen des Druckpunktes und der Zugausrastung.

Das gezeigte Schnellwechselfutter umfaßt einen Futterschaft 1 und einen axial gegenüber diesem verschiebbar gelagerten Futterkörper 2 mit der vorderen Einsatzhülse 3 für den nicht gezeigten Schaft des Einsatzes, in welchem dann wiederum beispielsweise ein Bohrer oder Gewindeschneidbohrer lösbar gehaltert ist. Der Einsatz selbst ist dabei bevorzugt so ausgebildet, daß er eine Drehkupplung enthält, die bei einem vorgebbaren Wert ausrastet und damit die Drehverkupplung zwischen dem Bohrer und dem Schnellwechselfutter unterbricht. Die zur Schaffung eines axialen Längenausgleichs dienende axiale Verschiebbarkeit gegenüber dem Futterschaft ermöglicht einen selbsttätigen Ausgleich zwischen dem Vorschub des Werkzeugs und der Gewindesteigung des Gewindeschneidbohrers. Die Drehmomentübertragung zwischen dem Futterschaft und dem Futterkörper bewirken dabei in üblicher Weise Kugeln 5, die in Längsnuten 6 und 7 der beiden gegeneinander verschiebbaren Futterteile 1 und 2 eingreifen. Im dargestellten Ausführungsbeispiel ist der Futterschaft mit einer zentralen hinteren Kühlmittelzuführung 9 versehen. Der innere achs-zentrale Kühlmittelkanal umfaßt ein Kühlmittelrohr 10, welches fest mit dem Futterkörper 2 verbunden ist und im Futterschaft 1 axial verschiebbar ist. Die Details dieser Kühlmittelzufuhr, die zusätzlich eine Schiebehülse 16 umfaßt, die innere und äußere Verteilräume 21 und 22 bildet, sind nicht Gegenstand der vorliegenden Anmeldung und sollen daher an dieser Stelle nicht näher erläutert werden. Es ergibt sich hierdurch eine sehr kurz bauende Anordnung, bei der bei einer Verschiebung des Futterkörpers 2 sich das innere Volumen des Kühlmittelkanals nicht ändert und damit der Kühlmittelinnendruck nicht als hindernde Kraft für die Verschiebung von Futterkörper und Futterschaft wirksam werden kann.

Am Boden 28 der Einsatzhülse 3 des Futterkörpers 2 erkennt man einen Dichtring 29, mit einer umlaufenden, sich an den Schaft eines Einsatzes anlegenden Dichtlippe 30, durch die eine sehr einfache Abdichtung des Einsatzes gegeben ist.

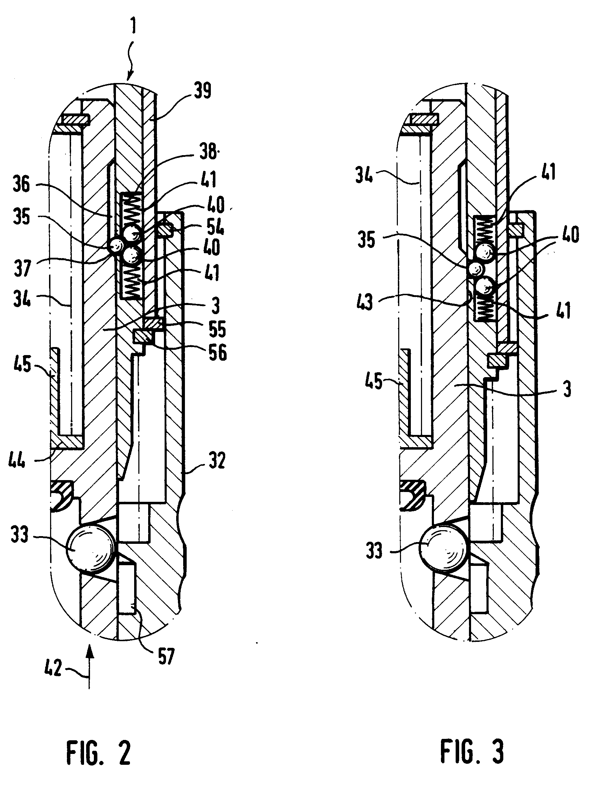

Im vorderen Endbereich einer Hülse 31 des Futterschaftes 1, im Überlappungsbereich mit einem Arretierring 32 für in eine Haltenut des nicht gezeigten Einsatzes eingreifende Rastkugeln 33 ist eine Vorrichtung zur Erhöhung der Ansprechkraft vorgesehen, die sicherstellt, daß bis zu einer hohen vorgebbaren Ansprechkraft überhaupt keine Verschiebung des Futterkörpers 3 im Futterschaft 1 stattfindet, auch wenn die Feder 34, die ein Nach-innen-Schieben des Futterkörpers 2 im Futterschaft 1 ermöglicht, relativ weich ausgelegt ist, wie es sich für die Funktionsweise derartiger Futter als zweckmäßig erwiesen hat. Zu diesem Zweck ist eine Sperrkugel 35 vorgesehen, die in eine axiale Längsnut 36 des Futterkörpers 2 eingreift und die an einer vorderen Ausrastschräge 37 der Längsnut 36 anliegend bei Überschreiten einer vorgegebenen Ansprechkraft nach außen in die Hülse 31 des Futterschafts ausweicht. Zu diesem Zweck ist in dieser Hülse eine nach außen offene Ausnehmung 38 vorgesehen, die durch eine Abdeckhülse 39 verschlossen ist. In dieser Ausnehmung befinden sich zwei gegenüber der Sperrkugel 35 etwas größere Spannkugeln 40, die jeweils durch axial verlaufende Druckfedern 41 gegeneinander verspannt sind. Wird beim Andrücken des Bohrers der Druck in Richtung des Pfeils 42 in Fig. 2 zu groß, d.h. wird die vorgegebene Ansprechkraft überschritten, so wird die Sperrkugel 35 zwischen die Spannkugeln 40 gedrückt, wobei sich beim Ausrasten der Sperrkugel ständig der Eingriffswinkel der Kuglen ändert. Dies hat zur Folge, daß nach dem Ausrasten nur eine minimale radiale Kraft besteht, so daß die Sperrkugel 35 in der in Fig. 3 gezeigten Ausraststellung nur mit einer äußerst kleinen Kraft an der äußeren Schaftfläche 43 des Futterkörpers 2 anliegt und somit weder die Bewegung des Futterkörpers in der Futterhülse 1 nennenswert bremst, noch dauerhafte Verformungen der Oberfläche bewirken kann. Nach dem Ausrasten der Sperrkugel 35, beispielsweise mit einer hohen Ansprechkraft von 150 Newton, wird die Längenausgleichsfeder 34 wirksam, die als Druckfeder wirkend zwischen dem äußeren Rand 44 einer Hülse 45, deren innerer Rand 46 sich an einem Seeger-Ring 47 des vorderen Endes des Futterschafts 1 abstützt, und einem Ring 48 abgestützt ist, der starr an einer Schulter 49 des Futterschaftes anliegt. Diese weiche Längenausgleichsfeder hat beispielsweise nur 70 Newton.

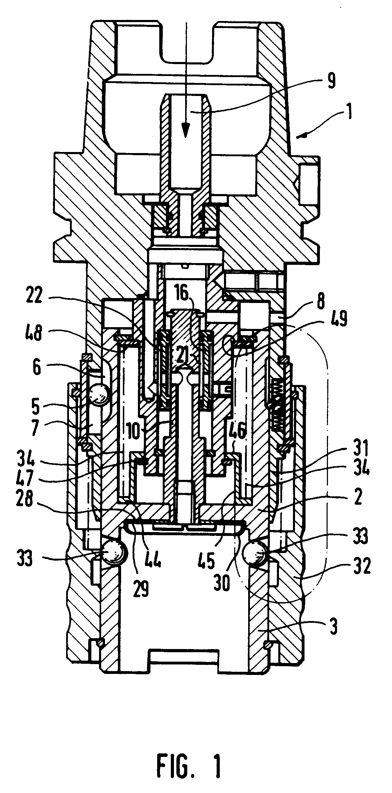

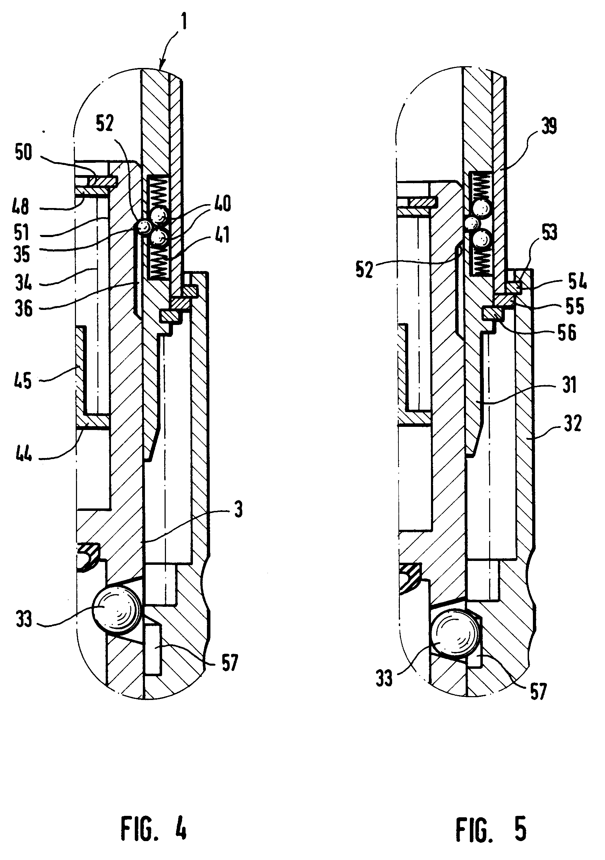

Die vorstehend anhand der Figuren 1 bis 3 beschriebene Vorrichtung zur Erhöhung der Ansprechkraft, beispielsweise beim Bohren mit einem stumpfen Bohrer zur Vermeidung eines vorzeitigen Ansprechen des Längenausgleichs, dient auch noch zu einer besonderen Zugausrastung im Falle eines Verkeilens des Werkzeugs beim Zurückziehen, was anhand der Figuren 4 und 5 im einzelnen dargestellt werden soll.

Wird das Schnellwechselfutter, beispielsweise nach dem Beendigen des Gewindeschneidens, nach rückwärts zurückgezogen und der Bohrer bleibt wegen Verkeilens im Gewinde hängen, so rastet zum einen zunächst die Drehkupplung im Einsatz aus. Beim Zurückziehen des Futterschafts 1 bewegt sich diesem gegenüber der Futterkörper 2 nach außen (Fig. 4), wobei ein Seeger-Ring 50 in einer Innenbohrung 51 von der Schulter 49 des Futterschafts abhebt, so daß die Feder 34 nunmehr als Rückholfeder wirkt, die den Futterkörper wieder in den Futterschaft hineinzuziehen versucht. Ist das Ende des Längenausgleichs, in diesem Fall das obere Ende der Längsnut 36 mit einer zweiten Ausrastschräge 52, erreicht (Fig. 4), so legt sich in dieser Stellung ein in eine Innenringnut 53 des Arretierrings 32 eingesetzter Seeger-Ring 54 an einem als Gegenanschlag wirkenden Ring 55 an, der zwischen einem Seeger-Ring 56 der Hülse 31 des Futterschafts 1 und der Abdeckhülse 39 verklemmt ist. Bei einem noch weiteren Ausziehen des Futterkörpers mit einer die Ausrastkraft der Sperrkugel 35 zwischen die beiden Spannkugeln 40 überschreitenden Auszugskraft kann sich der Arretierring 32 wegen des Anliegens des Seeger-Rings 53 am starr mit dem Futterschaft 1 verbundenen Ring 55 nicht mitbewegen, so daß die Rastkugeln 33 in die Aufnahme 57 des Arretierrings 32 ausrasten können und somit den Einsatz freigeben. Damit ist sichergestellt, daß bei einer derartigen Verkeilung des Bohrers beim Zurückziehen des Schnellwechselfutters dieses nicht zu Bruch gehen kann, sondern der Einsatz ausgelöst wird, der gemeinsam mit dem Bohrer dann in der verkeilten Gewindeöffnung steckenbleibt. Das Schnellwechselfutter selbst bleibt aber unbeschädigt. Durch entsprechende Wahl der Ausrastschräge 52 kann die Ansprechkraft des Druckpunktes auch anders eingestellt werden als die Ansprechkraft des Futters beim Anbohren auf Druck.

## Patentansprüche

1. Schnellwechselfutter mit einer Längenausgleichsvorrichtung, bei der der Futterkörper (2) gegen einen Federausgleich in den Futterschaft (1) verschiebbar und gegen die Wirkung einer Rückholfeder gegenüber dem Futterschaft (1) ausziehbar ist, und mit einer Vorrichtung zur Erhöhung der Ansprechkraft in Form einer unter Federkraft in eine Lagerausnehmung des Futterkörpers (2) mit einer Ausrastschräge (37) gedrückten, in den Futterschaft unter Freigabe des Futterkörpers (2) ausrastbaren Sperrkugel (35), insbesondere für Einsätze mit einer Rutschkupplung, dadurch gekennzeichnet, daß die Sperrkugel (35) zwischen zwei durch axial verlaufende Druckfedern (41) gegeneinander verspannte, in einer Axialausnehmung (38) des Futterschafts (1) gelagerte Spannkugeln (40) ausrastbar verschiebbar ist.

2. Schnellwechselfutter nach Anspruch 1, dadurch gekennzeichnet, daß die Vorrichtung zur Erhöhung der Ansprechkraft im vorderen Endbereich einer Hülse (31) des Futterschafts (1) im Überlappungsbereich mit einem Arretierring (32) für in eine Haltenut des Einsatzes eingreifende Rastkugeln (33) angeordnet ist, daß die Lagerausnehmung eine Längsnut (36) ist, deren Länge dem Längenausgleich entspricht und daß am Arretierring (32) ein nach Erreichen des vollen Längenausgleichs an einem Gegenanschlag (55) des Futterschafts (1) angreifender Ausrastanschlag (54) vorgesehen ist, so daß der Arretierring (32) bei einem weiteren Auszug des Futterkörpers (2) aus dem Futterschaft (1) durch Ausrasten der Sperrkugel (35) an der inneren Ausrastschräge (52) der Längsnut (36) gegenüber dem Futterkörper (3) in eine Freigabestellung der Rastkugel (33) unter Lösen des Einsatzes verschiebbar ist.

3. Schnellwechselfutter nach Anspruch 2, dadurch gekennzeichnet, daß der Ausrastanschlag ein in eine Innenringnut (53) des Sperrings (32) eingesetzter Seeger-Ring (54) ist.

4. Schnellwechselfutter nach einem der Ansprüche 1 bis 3, dadurch gekennzeichnet, daß die Axialausnehmung (38) des Futterschaftes (1) nach außen offen und von einer lösbaren, vorzugsweise zwischen Seeger-Ringen liegenden, Abdeckhülse (39) verschlossen ist.

5. Schnellwechselfutter nach Anspruch 4, dadurch gekennzeichnet, daß zwischen einem in eine Nut des Futterschaftes eingesetzten Seeger-Ring (56) und dem vorderen Ende der Abdeckhülse (39) ein radial über diese nach außen unter Bildung des Gegenanschlags überstehender Ring (55) eingeklemmt ist.

## Claims

1. A quick-change chuck with length compensating device, in which the chuck body (2) is displaceable against spring compensation in the chuck shaft (1) and can be withdrawn relative to the chuck shaft (1) against the effect of a restoring spring, and with a device for increasing the gripping force in the form of a locking ball (35), which is pressed under spring force into a bearing recess in the chuck body (2) with an unlocking bevel (37) and can be released into the chuck shaft to release the chuck body (2), more particularly for use with a slip clutch, characterized in that the locking ball (35) is displaceable for its release between two bracing balls (40) mounted in an axial recess (38) of the chuck shaft (1) and braced relative to one another by axially extending compression springs (41).

2. A quick-change chuck according to claim 1, characterized in that the device for increasing the gripping force is arranged in the front end region of a sleeve (31) of the chuck shaft (1) in the region of overlap with a locking ring (32) for locking balls (33) engaging in a retaining groove of the insert, the bearing recess is a longitudinal groove (36), whose length corresponds to the length compensation, and an unlocking abutment (54) acting upon a counter abutment (55) of the chuck shaft (1) when the full length compensation is reached is provided on the locking ring (32), so that the locking ring (32), upon further withdrawal of the chuck body (2) from the chuck shaft (1), is displaceable relative to the chuck body (3) by the release of the locking ball (35) on the inner unlocking bevel (52) of the longitudinal groove (36) into a release position of the locking ball (33) to release the insert.

3. A quick-change chuck according to claim 2, characterized in that the unlocking abutment is a Seeger ring (54) inserted into an inner annular groove (53) in the locking ring (32).

4. A quick-change chuck according to one of claims 1 to 3, characterized in that the axial recess (38) of the chuck shaft (1) is open towards the outside and is closed by a releasable cover sleeve (39) preferably lying between Seeger rings.

5. A quick-change chuck according to claim 4, characterized in that, clamped between a Seeger ring (56) inserted into a groove in the chuck shaft and the front end of the cover sleeve (39) is a ring (55) projecting radially outwards beyond said parts to form the counter abutment.

## Revendications

1. Mandrin à changement rapide comportant un dispositif de compensation de longueur, dans lequel le corps (2) du mandrin est déplaçable à l'encontre d'une compensation produite par un ressort dans la queue (1) du mandrin et peut être retiré à l'encontre de l'action d'un ressort de rappel, par rapport à la queue (1) du mandrin, et comportant un dispositif pour accroître la force de réponse sous la forme d'une bille d'arrêt (35), qui est repoussée sous la force d'un ressort dans un évidement de support du corps (2) du mandrin, pourvu d'un biseau de désencliquetage (37), et peut être désencliquetée dans la queue du mandrin en libérant le corps (2) du mandrin, notamment pour des inserts comportant un accouplement patinant, caractérisé en ce que la bille d'arrêt (35) est déplaçable, de manière à pouvoir être désencliquetée, entre deux billes de serrage (40), qui sont sollicitées l'une contre l'autre par des ressorts de pression axiaux (41) et sont montées dans un évidement axial (38) de la queue (1) du mandrin.

2. Mandrin à changement rapide selon la revendication 1, caractérisé en ce que le dispositif servant à accroître la force de réponse est disposé dans la partie d'extrémité avant d'une douille (31) de la queue (1) du mandrin, dans la zone de chevauchement avec une bague d'arrêt (32) pour des billes d'encliquetage (33) s'engageant dans une rainure de retenue de l'insert, en ce que l'évidement de support est une rainure longitudinale (36), dont la longueur correspond à la compensation de longueur et en ce qu une butée de désencliquetage (54) qui, après que la compensation complète de longueur a été atteinte, s'applique contre une butée antagoniste (55) de la queue (1) du mandrin, est prévue sur la bague d'arrêt (32), de sorte que, lorsqu'on continue à tirer le corps (2) du mandrin hors de la queue (1) du mandrin, la bague d'arrêt (32) est déplaçable par désencliquetage de la bille d'arrêt (35) sur le biseau intérieur de désencliquetage (52) de la rainure longitudinale (36) par rapport au corps (3) du mandrin, pour venir dans une position de libération de la bille d'encliquetage (33), en desserrant l'insert.

3. Mandrin à changement rapide selon la revendication 2, caractérisé en ce que la butée de désencliquetage est une bague de type Seeger (54), insérée dans une gorge annulaire intérieure (53) de la bague d'arrêt (32).

4. Mandrin à changement rapide selon l'une des revendications 1 à 3, caractérisé en ce que l'évidement axial (38) de la queue (1) du mandrin est ouvert vers l'extérieur et est fermé par une douille de recouvrement amovible (39), qui est située de préférence entre des bagues de type Seeger.

5. Mandrin à changement rapide selon la revendication 4, caractérisé en ce qu'entre une bague de type Seeger (56), insérée dans une gorge de la queue du mandrin, et l'extrémité avant de la douille de recouvrement (39), est pincée une bague (55) qui fait saillie radialement vers l'extérieur au-delà de cette douille, en formant la butée antagoniste.
